# EUROPÄISCHE PATENTANMELDUNG

(11) **EP 2 837 982 A1**
(43) Veröffentlichungstag der Anmeldung: **18.02.2015**
(21) Anmeldenummer: 13180417.1
(22) Anmeldetag: 14.08.2013
(51) Int. Cl.: G05B 19/418, G05B 19/05, G05B 19/042

(54) **Verfahren zur Änderung des strukturellen Ablaufs eines Batchprozesses**

(71) Anmelder: Siemens Aktiengesellschaft, 80333 München (DE)
(72) Erfinder: Varga, Vojtech, 76187 Karlsruhe (DE)

(57) **Zusammenfassung**

Die Erfindung betrifft ein Verfahren zur Änderung des strukturellen Ablaufs eines Batchprozesses, wobei zur Steuerung des Batchprozesses eine auf einer grafischen Benutzeroberfläche darstellbare Rezeptprozedur (1) vorgesehen ist, die mehrere Teilrezepturen (2a, 2b, 2c) aufweist, welche jeweils mehrere Rezeptelemente (3, 4) sowie Transitionen umfassen. Es werden Maßnahmen vorgeschlagen, welche Änderungen am strukturellen Ablauf des Batchprozesses erleichtern. Es wird z.B. eine Trennstelle in der Rezeptprozedur eingefügt und an diee Trenstelle eine zusätzlihe Teilrezeptur eingefügt.

## Beschreibung

Die Erfindung betrifft ein Verfahren zur Änderung des strukturellen Ablaufs eines Batchprozesses, wobei zur Steuerung des Batchprozesses mittels eines Batch-Servers eine auf einer grafischen Benutzeroberfläche darstellbare Rezeptprozedur vorgesehen ist, die mehrere Teilrezepturen aufweist, welche jeweils mehrere Rezeptelemente sowie Transitionen umfassen, wobei ferner ein Schnittstellenbaustein eines Automatisierungsgerätes aus der Rezeptprozedur ein Steuerprogramm für das Automatisierungsgerät erzeugt. Darüber hinaus betrifft die Erfindung eine zur Durchführung des Verfahrens geeignete Anordnung mit einem Automatisierungsgerät und einem Programmiergerät.

Geeignete Hard- und Software-Komponenten eines Batch-Systems zur Verwirklichung eines derartigen Verfahrens sind aus dem Siemens-Katalog "Prozessleitsystem SIMATIC PCS 7 - Systemkomponenten, Ausgabe Juni 2013", Kapitel 13, bekannt. Mittels einer so genannten auf einem Programmiergerät oder Batch-Client des Batch-Systems ablauffähigen "BATCH Software" erstellt ein Anwender eine Rezeptprozedur zur Steuerung eines Batch- bzw. Chargenprozesses, beispielsweise eine Rezeptprozedur zur Herstellung von Kunstharz, Farbstoffen oder Düngemitteln. Eine derartige Rezeptprozedur weist gewöhnlich eine Vielzahl von Teilrezepturen auf, die jeweils mehrere Rezeptelemente in Form von Rezeptoperationen oder Rezeptfunktionen, z. B. Dosieren, Heizen oder Rühren, sowie Transitionen umfassen. Die Rezeptoperationen und/oder die Rezeptfunktionen stehen während des Steuerbetriebs in Wirkverbindung mit geeigneten Hard- und Softwarekomponenten einer Automatisierungseinrichtung, die gewöhnlich mindestens ein mit Funktionsbaugruppen versehenes Automatisierungsgerät umfasst, welches über einen Bus mit einer Vielzahl von Feldgeräten verbunden ist. Während dieses Steuerbetriebs arbeitet ein Batch-Server des Batch-Systems die Rezeptprozedur sequentiell ab und korrespondierend dazu verarbeitet die mit dem Batch-Server online verbundene Automatisierungseinrichtung zu jeder Rezeptoperation bzw. Rezeptfunktion jeweils einen dieser Operation oder Funktion zugeordneten Softwarebaustein.

Gewöhnlich sind Rezeptprozeduren sehr komplex und deren Erstellung ist sehr aufwendig. Derartige Rezeptprozeduren können fehlerbehaftet sein und es kann aufgrund einer fehlerhaft erstellten Rezeptprozedur zu Prozessstörungen kommen. Für den Fall, dass z. B. eine fehlerhaft erstellte Teilrezeptur Ursache einer Prozessstörung ist, kann der Fehler durch eine entsprechende manuelle Änderung bzw. Anpassung zwar behoben werden, dazu ist es allerdings erforderlich, die gesamte Rezeptprozedur bzw. den Batchprozess anzuhalten.

Der Erfindung liegt daher die Aufgabe zugrunde, ein Verfahren der eingangs genannten Art anzugeben, welches derartige Nachteile vermeidet. Darüber hinaus ist eine Anordnung zu schaffen, welche zur Durchführung des Verfahrens geeignet ist.

Diese Aufgabe wird im Hinblick auf das Verfahren durch die im kennzeichnenden Teil des Anspruchs 1, bezüglich der Anordnung durch die im kennzeichnenden Teil des Anspruchs 2 angegebenen Maßnahmen gelöst.

Vorteilhaft ist, dass nicht die gesamte Rezeptprozedur bzw. der gesamte Batchprozess, sondern nur die Teilrezeptur angehalten werden muss, um gezielt Änderungen bzw. Anpassungen in dieser Teilrezeptur zu bewerkstelligen, wobei unter einer Änderung das Einfügen eines Rezeptelementes oder das Löschen eines Rezeptelementes verstanden wird. Die von diesen Änderungen nicht betroffenen Teilrezepturen werden dagegen weiter verarbeitet und laufen weiter. Ein Anwender kann gezielt nur die Bereiche ändern, die eine Anpassung benötigen.

In einer Ausgestaltung der Erfindung ist vorgesehen, die Rezeptprozedur sowohl mit als auch ohne Trennstelle und neuem Rezeptelement abzuspeichern. Dadurch wird sichergestellt, dass der Batchprozess mit und ohne Änderungen nachvollziehbar ist.

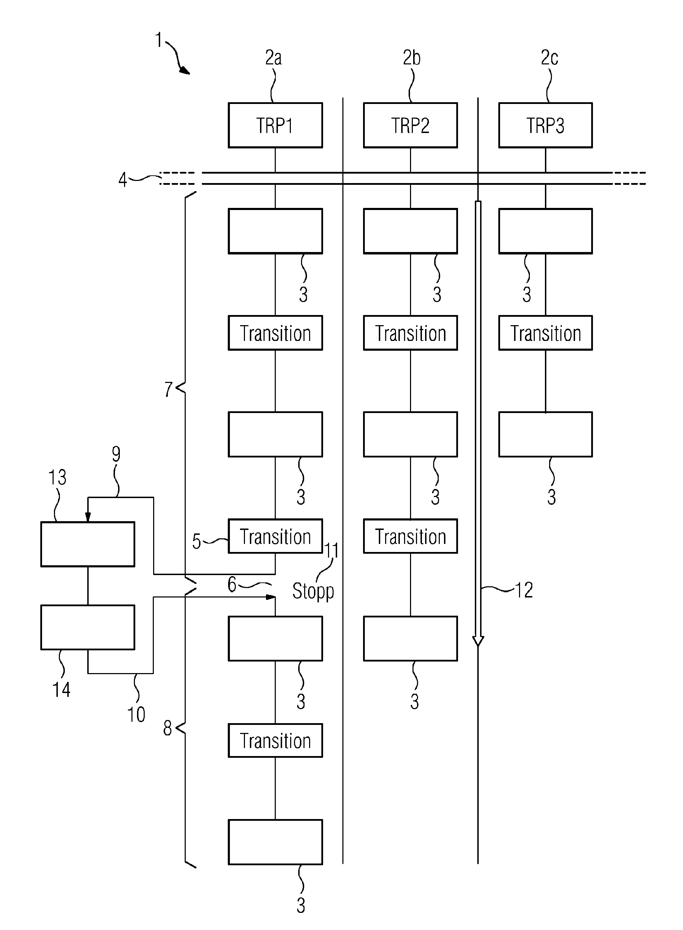

Die Erfindung wird nachfolgend anhand eines Ausführungsbeispiels unter Bezugnahme auf die einzige Figur der Zeichnung näher erläutert. Die Figur der Zeichnung zeigt die Darstellung einer Rezeptprozedur.

In der Figur ist mit 1 eine Rezeptprozedur eines Batch- bzw. Chargenprozesses bezeichnet, die in einer an sich bekannten Art und Weise auf einer Anzeigeeinheit eines Programmiergerätes oder Batch-Clients eines Batch-Systems dargestellt ist. Diese Rezeptprozedur 1, welche ein Anwender mittels einer geeigneten Batch-Software auf diesem mit einer geeigneten Benutzeroberfläche versehenen Batch-Client oder Programmiergerät erstellt, ist zur Steuerung eines technischen Prozesses vorgesehen, beispielsweise zur Herstellung von Kunstharz. Die Rezeptprozedur 1 weist mehrere Teilrezeptprozeduren 2a, 2b, 2c auf, die jeweils einen Teilprozess bzw. eine Prozessstufe auf einer Teilanlage steuern. Jede dieser Teilrezeptprozeduren 2a, 2b, 2c weist eine Vielzahl von Rezeptelementen, z. B. Rezeptoperationen 3 (ROP), Parallelverzweigungen 4 oder Transitionen auf, wobei jede dieser Rezeptoperationen 3, z. B. eine Rezeptoperation "Heizen" und "Mischen", wiederum eine Vielzahl von Rezeptelementen und/oder Rezeptfunktionen sowie Transitionen aufweisen kann. Selbstverständlich kann die Rezeptprozedur 1 weitere Teile umfassen, z. B. Synchronisationslinien, Schleifen, Operatoranweisungen oder Alternativabzweigungen.

Die Rezeptprozedur 1 steht in Wirkverbindung mit geeigneten Hard- und Softwarekomponenten eines Automatisierungsgerätes, welches z. B. einen Schnittstellenbaustein zur Erzeugung eines Steuerprogramms aus der Rezeptprozedur 1 aufweist. Während des Steuerbetriebs wird die Rezeptprozedur 1 sequentiell mittels eines Batch-Servers des Batch-Systems abgearbeitet, wobei korrespondierend dazu das mit dem Batch-Server online verbundene Automatisierungsgerät zu jeder Rezeptoperation bzw. -funktion jeweils einen dieser Operation oder Funktion zugeordneten Funktionsbaustein abarbeitet.

Im Folgenden wird angenommen, dass ein Anwender gezielt eine Änderung bzw. eine Anpassung an der Teilrezeptur 2a zwischen einer Transition 5 und einem dieser Transition 5 folgenden Rezeptelement 3 vorzunehmen hat. Dazu markiert der Anwender zunächst einen Bereich zwischen dieser Transition 5 und diesem Rezeptelement 3, indem der Anwender z. B. mittels eines Mauszeigers diesen Bereich anwählt. Diese Markierung repräsentiert eine gewünschte Trennstelle 6 der Teilrezeptur 2a, wobei diese Trennstelle 6 zum Einfügen mindestens eines Rezeptelementes vorgesehen ist. Diese Markierung bewirkt, dass die Teilrezeptur 2a an dieser Trennstelle 6 angehalten und diese in einen ersten und eine zweiten Teil 7, 8 aufgespalten wird und dass ein erster und ein zweiter Umleitungszeiger 9, 10 erzeugt werden. Die Teilrezepturen 2b, 2c werden dagegen nicht angehalten, sondern weiter abgearbeitet. In der Zeichnung ist das Anhalten der Teilrezeptur 2a mittels eines STOPP-Zeichens 11 und die Weiterverarbeitung der Teilrezepturen 2b, 2c mittels des Pfeiles 12 angedeutet. Die Umleitungszeiger 9, 10 weisen darauf hin, dass ein neues Rezeptelement eingefügt werden kann, wobei die Umleitungszeiger 9, 10 den ersten und zweiten Teil 7, 8 über ein vom Anwender neu erstelltes Rezeptelement kurzschließen. Im vorliegenden Ausführungsbeispiel schließen die Umleitungszeiger 9, 10 die ersten und zweiten Teile 7, 8 über Rezeptelemente 13, 14 kurz, wobei nach diesem Kurzschließen die Teilrezeptur 2a mit der Verarbeitung des Rezeptelementes 13 fortgesetzt wird.

Für den Fall, dass der Anwender beispielsweise die Transition 5 markiert, indem der Anwender mittels des Mauszeigers diese Transition 5 anwählt, so weist dies darauf hin, dass die Transition 5 selbst die Trennstelle 6 repräsentiert und dass die Transition 5 zu löschen ist. In diesem Fall schließen die Umlaufzeiger 9, 10 direkt die ersten und zweiten Teile 7, 8 kurz.

Um sicherzustellen, dass der Batchprozess sowohl mit den neuen Rezeptelementen 13, 14 als auch ohne diese Elemente nachvollziehbar ist, wird die Rezeptprozedur 1 sowohl mit als auch ohne diese Elemente im Programmiergerät bzw. Batch-Client abgespeichert.

## Patentansprüche

1. Verfahren zur Änderung des strukturellen Ablaufs eines Batchprozesses, wobei zur Steuerung des Batchprozesses mittels eines Batch-Servers eine auf einer grafischen Benutzeroberfläche darstellbare Rezeptprozedur (1) vorgesehen ist, die mehrere Teilrezepturen (2a, 2b, 2c) aufweist, welche jeweils mehrere Rezeptelemente (3, 4) sowie Transitionen umfassen, wobei ferner ein Schnittstellenbaustein eines Automatisierungsgerätes aus der Rezeptprozedur (1) ein Steuerprogramm für das Automatisierungsgerät erzeugt, **dadurch gekennzeichnet, dass** während des Batchprozesses eine Änderung des strukturellen Ablaufs einer Teilrezeptur (2a) bewirkt wird, indem
- mittels der Benutzeroberfläche eine Trennstelle (6) in der Teilrezeptur (2a) markiert wird, wobei aufgrund der Trennstelle (6) zunächst die Bearbeitung der Teilrezeptur (2a) an der Trennstelle (6) angehalten und die Teilrezeptur (2a) in einen ersten und einen zweiten Teil (7, 8) aufgespalten wird,
- automatisch ein erster und ein zweiter Umleitungszeiger (9, 10) erzeugt wird, wobei die Umleitungszeiger (9, 10) zum Kurzschließen des ersten und zweiten Teils (7, 8) über ein neu erstelltes Rezeptelement (13, 14) oder zum direkten Kurzschließen des ersten und zweiten Teils (7, 8) vorgesehen sind, wobei nach dem Kurzschließen die Bearbeitung der Teilrezeptur (2a) fortgesetzt wird.

2. Verfahren nach Anspruch 1, **dadurch gekennzeichnet, dass** die Rezeptprozedur (1) sowohl mit als auch ohne Trennstelle (6) und neuem Rezeptelement (13, 14) abgespeichert wird.

3. Anordnung mit einem Automatisierungsgerät und einem Programmiergerät, welches zur Erstellung einer auf einer grafischen Benutzeroberfläche des Programmiergeräts oder des Batch-Clients darstellbaren Rezeptprozedur (1) zur Steuerung des Batchprozesses mittels eines Batch-Servers vorgesehen ist, die mehrere Teilrezepturen (2a, 2b, 2c) aufweist, welche jeweils mehrere Rezeptelemente (3, 4) sowie Transitionen umfassen, wobei ferner ein Schnittstellenbaustein des Automatisierungsgerätes aus der Rezeptprozedur (1) ein Steuerprogramm für das Automatisierungsgerät erzeugt, **dadurch gekennzeichnet, dass** das Programmiergerät dazu ausgebildet ist,
- mittels der Benutzeroberfläche eine Trennstelle (6) in der Teilrezeptur (2a) zu markieren,
- aufgrund der Trennstelle (6) zunächst die Bearbeitung der Teilrezeptur (2a) anzuhalten und die Teilrezeptur (2a) in einen ersten und einen zweiten Teil (7, 8) aufzuspalten,
- automatisch einen ersten und einen zweiten Umleitungszeiger (9, 10) zu erzeugen, wobei die Umleitungszeiger (9, 10) zum Kurzschließen des ersten und zweiten Teils (7, 8) über ein neu erstelltes Rezeptelement (13, 14) oder zum direkten Kurzschließen des ersten und zweiten Teils (7, 8) vorgesehen sind,
- nach dem Kurzschließen die Bearbeitung der Teilrezeptur (2a) fortzusetzen.

4. Anordnung nach Anspruch 3, **dadurch gekennzeichnet, dass** das Programmiergerät oder der Batch-Client ferner dazu ausgebildet ist, die Rezeptprozedur (1) sowohl mit als auch ohne Trennstelle (6) und neuem Rezeptelement (13, 14) abzuspeichern.
